# EUROPÄISCHE PATENTSCHRIFT

(11) **EP 0 854 969 B1**
(45) Veröffentlichungstag und Bekanntmachung des Hinweises auf die Patenterteilung: **06.02.2002**
(21) Anmeldenummer: 96944570.9
(22) Anmeldetag: 08.10.1996
(51) Int. Cl.: F01K 7/40, F22D 1/32

(54) **DAMPFTURBINENANLAGE**
STEAM POWER PLANT
CENTRALE THERMIQUE A VAPEUR

(30) Priorität: 09.10.1995 DE 19537478
(43) Veröffentlichungstag der Anmeldung: 29.07.1998
(73) Patentinhaber: SIEMENS AKTIENGESELLSCHAFT, 80333 München (DE)
(72) Erfinder: KEFER, Volker, D-91056 Erlangen (DE); DROSDZIOK, Armin, D-45327 Essen (DE)
(86) Internationale Anmeldenummer: DE9601924
(87) Internationale Veröffentlichungsnummer: WO9713960

(56) Entgegenhaltungen:
- EP-A- 0 206 135
- EP-A- 0 415 314
- DE-A- 2 358 349
- DE-A- 2 553 397
- GB-A- 273 803
- US-A- 3 178 891

## Beschreibung

Die Erfindung betrifft eine Dampfturbinenanlage mit einer Anzahl von auf einer gemeinsamen Turbinenwelle angeordneten Druckstufen.

Bei einer Dampfturbinenanlage ist üblicherweise ein der Dampfturbine nachgeschalteter Kondensator unterhalb der Dampfturbine angeordnet. Außerdem umfaßt die Dampfturbinenanlage zur Vorwärmung von im Wasserdampfkreislauf der Damofturbine geführtem Kondensat oder Speisewasser eine Vielzahl von Vorwärmern einer Vorwärmstrecke (siehe zum Beispiel GB-A-273 803). Zur Verbindung der Vorwärmer untereinander und mit der Dampfturbine ist ein entsprechend komplexes Rohrleitungssystem vorgesehen. Eine Dampfturbinenanlage mit einer Vielzahl von derartigen Vorwärmern ist beispielsweise aus der US-Patentschrift 5,404,724 bekannt. Eine derartige Dampfturbinenanlage bedingt somit aufgrund der Bauweise der Dampfturbine und aufgrund der großen Anzahl struktureller Komponenten einen erheblichen baulichen Aufwand und einen hohen Platzbedarf. Zudem ist der Montageaufwand bei der Errichtung einer derartigen Dampfturbinenanlage besonders hoch, zumal die oberhalb des Kondensators angeordnete Dampfturbine eine aufwendige Tragkonstruktion erforderlich macht.

Eine Dampfturbinenanlage mit einer Anzahl von Druckstufen und mit einem in axialer Richtung der Turbinenwelle abstromseitig angeordneten Kondesator ist aus der EP-A-206 135 bekannt.

Der Erfindung liegt daher die Aufgabe zugrunde, eine besonders kompakte Dampfturbinenanlage anzugeben, die zudem in besonders einfacher Weise montierbar ist.

Diese Aufgabe wird erfindungsgemäß gelöst durch eine Dampfturbinenanlage mit einer Anzahl von auf einer gemeinsamen Turbinenwelle angeordneten Druckstufen, und mit einem in axialer Richtung der Turbinenwelle abströmseitig angeordneten Kondensator, sowie mit einem Speisewasser-Vorwärmer mit einer Anzahl von mit Anzapfdampf aus einer oder jeder Druckstufe beheizbaren und in einem gemeinsamen Gehäuse angeordneten Wärmetauschermodulen, die speisewasserseitig in Reihe und anzapfdampfseitig parallel geschaltet sind, wobei jeweils zwei benachbarte Wärmetauschermodule anzapfdampfseitig durch eine Trennwand voneinander separiert und speisewasserseitig über einen Sammler miteinander verbunden sind.

Die Erfindung geht dabei von der Überlegung aus, daß einerseits durch ebenerdige Anordnung aller relevanten Strukturteile, insbesondere der Dampfturbine und des Kondensators sowie der Speisewasservorwärmer der Vorwärmstrecke, der Montageaufwand bei der Errichtung einer Dampfturbinenanlage besonders gering ist. Andererseits kann durch eine kompakte Bauweise der Vorwärmstrecke diese besonders raumsparend und zusätzlich nahe neben der Dampfturbine angeordnet werden. Eine kompakte Bauweise der Vorwärmstrecke wiederum ist durch einen modularen Aufbau eines einzelnen Speisewasservorwärmers erreichbar. Entsprechende Wärmetauschermodule können dann speisewasserseitig in der Art eines Multiplex-Vorwärmers direkt hintereinander geschaltet sein, so daß Verbindungsleitungen eingespart sind. Eine weitere Reduzierung des Montageaufwandes wird zudem erreicht, indem die Wärmetauschermodule in einem gemeinsamen Gehäuse angeordnet sind. Ein Wärmetauschermodul an sich ist beispielsweise aus der Druckschrift DE-A-39 05 066 bekannt. Eine besonders zuverlässige Entkopplung unterschiedlicher Druckstufen des Anzapfdampfes vcneinander ist dabei durch die Trennung der Wäremtauschermodule über die jeweilige Trennwnad erreichbar.

In vorteilhafter Ausgestaltung sind die Druckstufen der Dampfturbine und der Kondensator in einem gemeinsamen Gehäuse angeordnet. Um den Wärmeinhalt des den einzelnen Wärmetauschermodulen jeweils zugeführten Anzapfdampfes besonders effektiv zu nutzen und damit einen besonders hohen Wirkungsgrad der Dampfturbinenanlage zu erreichen, ist zudem jedes Wärmetauschermodul hinsichtlich seines Auslegungsdrucks zweckmäßigerweise an eine Druckstufe angepaßt.

Zur Rückführung von beim Wärmetauson innerhalb der Wärmetauschermodule kondensiertem Anzapfdampf ist zweckmäßigerweise eine den Wärmetauschermodulen gemeinsame Sammelschiene für den kondensierten Anzapfdampf vorgesehen.

Für den Einsatz im Leistungsbereich bis etwas 350 MW ist die Dampfturbine vorteilhafterweise halbtourig ausgelegt. Dies bedeutet, daß die Rotationsfrequenz der Turbinenwelle gleich der halben Netzfrequenz (50 oder 60 Hz) des vom Generator gespeisten Netzes ist.

Die mit der Erfindung erzielten Vorteile bestehen insbesondere darin, daß durch eine axiale Anordnung des Kondensators auf der Abströmseite der Turbinenwelle ein besonders hoher Wirkungsgrad der Dampfturbine aufgrund der axialen Abströmung des entspannten Dampfes erzielt wird. Darüber hinaus kann durch die Anordnung des Kondensators direkt hinter der Abströmflut die Dampfturbine praktisch ebenerdig und somit ohne aufwendige Tragkonstruktionen aufgestellt werden. In Verbindung mit dem kompakt aufgebauten Speisewasser- oder Multiplex-Vorwärmer, der ebenfalls ebenerdig und in unmittelbarer Nähe der Dampfturbine aufgestellt werden kann, wird insgesamt eine besonders kompakte und raumsparende Bauweise erreicht. Die Anforderungen an die Statik und die Größe der Maschinenhauses sind somit gering. Geht man weiter davon aus, daß bei der Montage und auch bei einer späteren Revision das Ein- und Ausheben von Anlagenkomponenten mit mobilen Kränen oder Autokränen erfolgt, so kann das Maschinenhaus als reiner Wetterschutz ausgeführt sein. Zudem erlaubt das beschriebene Konzept eine weitgehende Vorfertigung der Komponenten, insbesondere der Wärmetauschermodule. Ferner werden lediglich besonders kurze Rohrleitungen für Anzapfdampf, Kondensatrücklauf und Speisewasserzuführung benötigt. Somit können die Dampfturbine und der Kondensator sowie die Speisewasserförderung und Speisewasservorwärmung als eine integrierte Einheit geplant und gefertigt werden.

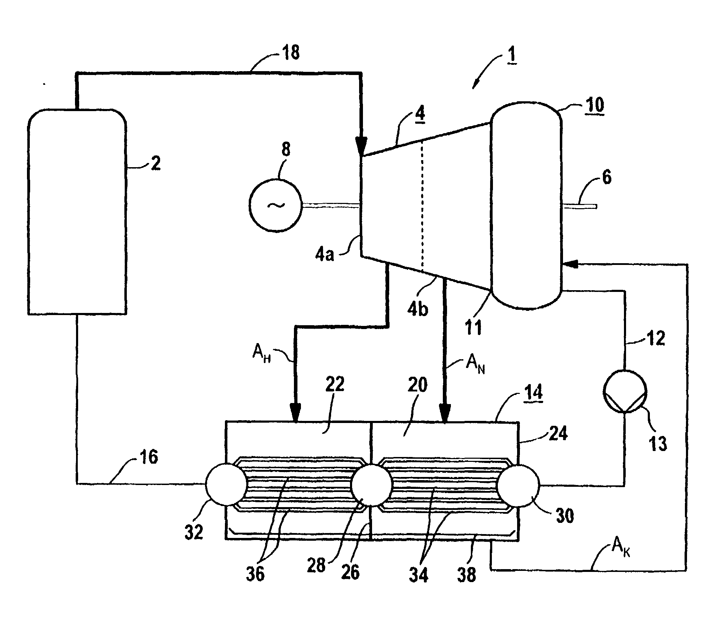

Ein Ausführungsbeispiel der Erfindung wird anhand einer Zeichnung näher erläutert. Darin zeigt die Figur schematisch eine Dampf turbinenanlage mit einem axial zur Dampfturbine angeordneten Kondensator und mit einem Multiplex-Vorwärmer.

Die Dampfturbinenanlage gemäß der Figur ist Teil einer Dampfkraftanlage 1 mit einem Dampferzeuger 2. Die Dampfturbinenanlage umfaßt eine Dampfturbine 4 mit einer Hochdruckstufe 4a und einer Niederdruckstufe 4b, die über eine gemeinsame Turbinenwelle 6 einen Generator 8 antreiben. Die Dampfturbine 4 ist halbtourig ausgelegt, d.h. die Turbinenwelle 6 rotiert mit der halben Netzfrequenz des zu speisenden Stromnetzes. Ein der Dampfturbine 4 nachgeschalteter Kondensator 10, der mit dieser in einem gemeinsamen Gehäuse angeordnet ist, ist abströmseitig in axialer Richtung der Turbinenwelle 6 und damit neben der Dampfturbine 4 angeordnet.

Der Kondensator 10 ist ausgangsseitig über eine Speisewasserleitung 12, in die eine Speisewasserpumpe 13 geschaltet ist, an einen Speisewasservorwärmer 14 oder Multiplex-Vorwärmer angeschlossen. Der Speisewasservorwärmer 14 mündet ausgangsseitig über eine Speisewasserleitung 16 in den Dampferzeuger 2, der seinerseits ausgangsseitig über eine Frischdampfleitung 18 mit dem Hochdruckteil 4a der Dampfturbine 4 verbunden ist.

Der Multiplex-Vorwärmer 14 umfaßt im Ausführungsbeispiel zwei wärmetauschermodule 20, 22, die in einem gemeinsamen Gehäuse 24 angeordnet sind. Jedes Wärmetauschermodul 20, 22 des Multiplex-Vorwärmers 14 wird mit Anzapfdampf A_{N} bzw. A_{H} beaufschlagt. Druck- und Temperatur des Anzapfdampfes A_{N}, A_{H} sind dabei Funktionen des Ortes der jeweiligen Anzapfung der Dampfturbine 4. Im Ausführungsbeispiel ist der Anzapfdampf A_{N} aus der Niederdruckstufe 4b der Dampfturbine 4 entnommen, wogegen der Anzapfdampf A_{H} aus der Hochdruckstufe 4a der Dampfturbine 4 entnommen ist. Somit weist der Anzapfdampf A_{H} eine hohe Temperatur und einen hohen Druck auf, während der Anzapfdampf A_{H} eine vergleichsweise niedrige Temperatur und einen vergleichsweise niedrigen Druck aufweist. Die hintereinander angeordneten Wärmetauschermodule 20, 22 sind dementsprechend für die unterschiedlichen Druckbereiche des Anzapfdampfes A_{H} bzw. A_{N} ausgelegt. Alternativ kann aber auch beiden Wärmetauschermodulen 20, 22 gleichermaßen Anzapfdampf A_{H} aus der Hochdruckstufe 4a der Dampfturbine 4 oder auch Anzapfdampf A_{N} aus der Niederdruckstufe 4b der Dampfturbine 4 zuführbar sein. Zusätzlich können weitere Wärmetauschermodule und/oder weitere Dampfanzapfungen A vorgesehen sein.

Um die Druckbereiche der Wärmetauschermodule 20, 22 voneinander zu entkoppeln, ist zwischen dem Wärmetauschermodul 20 und dem Wärmetauschermodul 22 eine Trennwand 26 vorgesehen. Die Wärmetauschermodule 20, 22 sind anzapfdampfseitig somit parallel geschaltet.

Speisewasserseitig sind die Wärmetauschermodule 20, 22 über einen Sammler 28 miteinander verbunden. Im Ausführungsbeispiel bildet der Sammler 28 einen Teil der Trennwand 26. Weitere Sammler 30, 32 sind am speisewasserseitigen Eintritt bzw. Austritt des Multiplex-Vorwärmers 14 vorgesehen.

In den Wärmetauschermodulen 20, 22 sind jeweils eine Anzahl von Speisewasserrohren 34 bzw. 36 vorgesehen. Die Speisewasserrohre 34 des Wärmetauschermoduls 20 sind dabei eingangsseitig mit dem Eintritts-Sammler 30 und ausgangsseitig mit dem Sammler 28 verbunden. Weiter sind die Speisewasserrohre 36 des Wärmetauschermodules 22 eingangsseitig mit dem Sammler 28 und ausgangsseitig mit dem Austritts-Sammler 32 verbunden. Die Wärmetauschermodule 20, 22 des Multiplex-Vorwärmers 14 sind somit speisewasserseitig in Reihe geschaltet.

Zur Rückführung von kondensiertem Anzapfdampf A_{N}, A_{H} in den Kondensator 10 ist eine den Wärmetauschermodulen 20, 22 gemeinsame Sammelschiene 38 für kondensierten Anzapfdampf A_{K} vorgesehen.

Sowohl die Dampfturbine 4 mit nachgeschaltetem Kondensator 10 als auch der Multiplex-Vorwärmer 14 sind ebenerdig und besonders nahe beieinander angeordnet. Somit ist der Platzbedarf für die Dampfturbinenanlage besonders gering.

## Patentansprüche

1. Dampfturbinenanlage mit einer Anzahl von auf einer gemeinsamen Turbinenwelle (6) angeordneten Druckstufen (4a, 4b), mit einem in axialer Richtung der Turbinenwelle (6) abströmseitig angeordneten Kondensator (10), **gekennzeichnet durch** einen Speisewasservorwärmer (14) mit einer Anzahl von Wärmetauschermodulen (20, 22), die mit Anzapfdampf (A_{N}, A_{H}) aus einer oder jeder Druckstufe (4a, 4b) beheizbar, in einem gemeinsamen Gehäuse (24) angeordnet und speisewasserseitig in Reihe und anzapfdampfseitig parallel geschaltet sind, wobei jeweils zwei benachbarte Wärmetauschermodule (20, 22) anzapfdampfseitig mittels einer Trennwand (26) separiert und speisewasserseitig über einen Sammler (28) miteinander verbunden sind.

2. Dampfturbinenanlage nach Anspruch 1,
**dadurch gekennzeichnet, daß** die Druckstufen (4a, 4b) und der Kondensator (10) in einem gemeinsamen Gehäuse (13) angeordnet sind.

3. Dampfturbinenanlage nach Anspruch 1 oder 2,
**dadurch gekennzeichnet, daß** jedes Wärmetauschermodul (20, 22) an eine Druckstufe (4a, 4b) angepaßt ist.

4. Dampfturbinenanlage nach einem der Ansprüche 1 bis 3, **gekennzeichnet durch** eine den Wärmetauschermodulen (20, 22) gemeinsame Sammelschiene (38) für kondensierten Anzapfdampf (A_{K}).

5. Dampfturbinenanlage nach einem der Ansprüche 1 bis 4,
**dadurch gekennzeichnet, daß** die Dampfturbine (4) halbtourig ausgelegt ist.

## Claims

1. Steam turbine plant with a number of pressure stages (4a, 4b) arranged on a common turbine shaft (6), and with a condenser (10) arranged on the outflow side in the axial direction of the turbine shaft (6), **characterized by** a feed-water preheater (14) with a number of heat exchanger modules (20, 22) which are capable of being heated with tapped steam (A_{N}, A_{H}) from one or each pressure stage (4a, 4b), are arranged in a common housing (24) and are connected in series on the feed-water side and in parallel on the tapped-steam side, in each case two adjacent heat exchanger modules (20, 22) being separated by means of a partition (26) on the tapped-steam side and being connected to one another via a header (28) on the feed-water side.

2. Steam turbine plant according to Claim 1, **characterized in that** the pressure stages (4a, 4b) and the condenser (10) are arranged in a common housing (13).

3. Steam turbine plant according to Claim 1 or 2, **characterized in that** each heat exchanger module (20, 22) is adapted to a pressure stage (4a, 4b).

4. Steam turbine plant according to one of Claims 1 to 3, **characterized by** a header rail (38), common to the heat exchanger modules (20, 22), for condensed tapped steam (A_{K}).

5. Steam turbine plant according to one of Claims 1 to 4, **characterized in that** the steam turbine (4) is of half-revolution design.

## Revendications

1. Installation à turbine à vapeur ayant un certain nombre d'étages (4a, 4b) de pression, un condenseur (10) disposé suivant la direction axiale de l'arbre (6) de la turbine du côté aval,
**caractérisée par** un préchauffeur (14) d'eau d'alimentation ayant un certain nombre de modules (20, 22) d'échangeurs de chaleur qui peuvent être chauffés par de la vapeur (A_{N}, A_{H}) soutirée d'un ou de chaque étage (4a, 4b) de pression, qui sont disposés dans une enveloppe (24) commune et qui sont montés en série du côté de l'eau d'alimentation et en parallèle du côté de la vapeur soutirée, deux modules (20, 22) échangeurs de chaleur voisins étant séparés de la vapeur soutirée au moyen d'une cloison (26) et communiquant du côté de l'eau d'alimentation par un collecteur (28).

2. Installation à turbine à vapeur suivant la revendication 1,
**caractérisée en ce que** les étages (4a, 4b) de pression et le condenseur (10) sont disposés dans une enveloppe commune.

3. Installation à turbine à vapeur suivant la revendication 1 ou 2,
**caractérisée en ce que** chaque module (20, 22) d'échangeur de chaleur est adapté à un étage (4a, 4b) de pression.

4. Installation à turbine à vapeur suivant l'une des revendications 1 à 3,
**caractérisée par** un rail (38) collecteur de vapeur (AR) soutirée condensée, qui est commun aux modules (20, 22) d'échangeur de chaleur.

5. Installation à turbine à vapeur suivant l'une des revendications 1 à 4,
**caractérisée en ce que** la turbine (4) à vapeur est conçue pour fonctionner à demi-régime.
